Europäisches Patentamt

European Patent Office

Office européen des brevets

(11) Publication number: **0 117 112**
**B1**

(12) **EUROPEAN PATENT SPECIFICATION**

(45) Date of publication of patent specification: **13.12.89**

(21) Application number: **84300896.2**

(22) Date of filing: **13.02.84**

(51) Int. Cl.⁴: **G 02 B 6/34,** G 02 B 6/38

(54) **Optical element mounting structure.**

(30) Priority: **17.02.83 JP 23821/83**

(43) Date of publication of application:
**29.08.84 Bulletin 84/35**

(45) Publication of the grant of the patent:
**13.12.89 Bulletin 89/50**

(84) Designated Contracting States:
**DE FR GB**

(56) References cited:
**EP-A-0 051 574**
**GB-A-2 054 898**
**US-A-4 134 129**

(73) Proprietor: **FUJITSU LIMITED**
**1015, Kamikodanaka Nakahara-ku**
**Kawasaki-shi Kanagawa 211 (JP)**

(72) Inventor: **Furuta, Hirosuke**
**1-11-1, Saginuma Miyamae-ku**
**Kawasaki-shi Kanagawa 213 (JP)**
Inventor: **Asanuma, Kazushi**
**3-8-12, Utsukushigaoka Midori-ku**
**Yokohama-shi Kanagawa 227 (JP)**
Inventor: **Okamoto, Akira**
**3-1-1-402, Takiyama**
**Higashikurume-shi Tokyo 203 (JP)**
Inventor: **Noda, Hideki**
**139-4-909, Omaru**
**Inagi-shi Tokyo 206 (JP)**

(74) Representative: **Rackham, Stephen Neil et al**
**GILL JENNINGS & EVERY 53-64 Chancery Lane**
**London WC2A 1HN (GB)**

Courier Press, Leamington Spa, England.

## Description

The present invention relates to a structure for mounting optical elements on a base plate.

Optical communication systems make use of numerous optical devices, such as devices for coupling light, devices for multiplexing light components of different wavelengths, light sources, and devices for attenuating light. Such optical devices also include optical elements for emitting light and optical elements for receiving light. The optical elements are mounted on and secured to a base plate. A common optical element comprises a cylindrical sleeve housing a lens and an end of an optical transmission fibre.

Light emerging from an optical transmission fibre supplied by an optical element emitting light is typically transmitted to an optical transmission fibre coupled an optical element for receiving light via an optical function element such as a filter, lens, prism, mirror, or switching element. If the optical axis of the optical element for receiving light, which is, in effect, the axis of its optical transmission fibre, is misaligned with respect to the optical axis of the light emerging from the optical element for emitting light this results in an increased transmission loss through the optical device. This is especially true when a single-mode type optical fibre is used, since the diameter of the core of the single-mode fibre is very small, typically about 10 μm, compared with the core of a multi-mode fibre, typically about 50 μm.

To minimize the transmission loss, the optical axis of the optical element for receiving light must be precisely aligned with the optical axis of the optical element for emitting light. The optical axis of the optical element for emitting light is invariably slightly inclined with respect to the surface of the base plate since accuracy in producing the element or attaching it to the base plate is limited. Therefore, the optical axis of the optical element for receiving light must usually be inclined with respect to the base plate surface to align it with the axis of the light from the optical element for emitting light.

In a conventional optical device, the optical element is mounted on and secured to the base plate by the following steps. First, a cylindrical sleeve of the optical element is placed adjacent the base plate at the position where the optical axis of the optical element for receiving light is aligned with the optical axis of the light from the optical element for emitting light and held there temporarily by an appropriate holder means. Then, a support member is placed between the cylindrical sleeve and the base plate. After that, the cylindrical sleeve is fixed to the support member surface by a synthetic resin adhesive agent. The support member is also secured to the base plate by means of the adhesive agent. The holder means which held the cylindrical sleeve at that position is then removed.

Using this conventional method, the cylindrical sleeve contacts the support member surface only along a generating line of the cylindrical body.

Therefore, the sleeve is easily displaced upon application of a force to it. Therefore, it is difficult to keep the sleeve reliably secured to the support member at the desired position. The problem is compounded because the adhesive agent degrades when the ambient temperature or humidity changes. Also, the process for securing the sleeve to the support member requires considerable time since the adhesive agent must be allowed to dry before the holder is removed.

According to this invention a structure for mounting an optical element having a cylindrical portion on a base plate comprises a holder member having a flat bottom surface, the cylindrical portion of the optical element being rotatably mounted in the holder member, the holder member being mounted on a wedge-shaped support member, wherein the flat bottom surface of the holder member contacts an inclined upper surface of the support member face-to-face and the lower inclined surface of the support member likewise contacts the upper surface of the base plate, and the structure being such that before the support member is secured to the base plate the support member is slidingly adjustable between and relative to the holder member and the base plate.

Various examples of structures in accordance with this invention will now be described with reference to the accompanying drawings; in which:—

Figure 1 is a plan view of an optical device;

Figure 2 is a section through a first example of a mounting structure;

Figure 3 is a perspective view of a support member;

Figure 4 is a perspective view of a holder member;

Figure 5 is a perspective view of a second example of mounting structure;

Figure 6 is a section through the second example, taken along the line VI—VI shown in Figure 5;

Figure 7 is a section through the holder member used in the second example;

Figure 8 is a section through a third example of the holder member;

Figure 9 is a section through a fourth example of holder member; and,

Figure 10 is a plan of a fifth example of holder member.

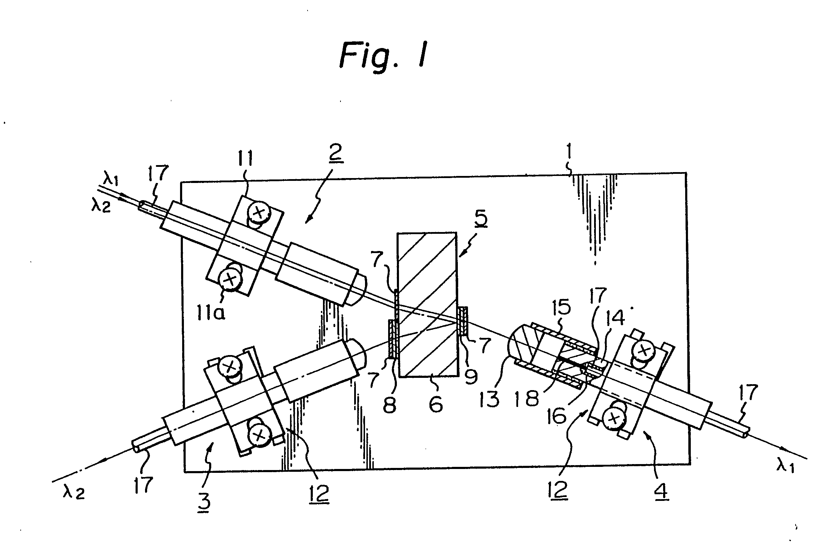

Figure 1 is a plan view of a device for multiplexing light of different wavelengths in which optical elements are secured to a base plate in a manner in accordance with the present invention. An input optical element 2, output optical elements 3 and 4, and a filtering element 5 are mounted on a base plate 1. The filtering element 5 comprises a prism 6, an anti-reflection film 7 on the prism 6 in the path of the input light, a multi-layered filtering film 8 which allows passage of light of a wavelength $\lambda_2$ and reflects light of a wavelength of other than $\lambda_2$, and another multi-layered filtering film 9 which allows passage of light of a wavelength of $\lambda_1$ and reflects light of a wavelength of other than $\lambda_1$. The filtering films 8 and 9 are coated on the prism surface in the paths of output light toward the output elements 3 and 4, respectively. An anti-reflection film 7 is coated on each of the filtering films 8 and 9.

The input light emitted from the input optical element 2 includes a component of wavelength of $\lambda_1$ and a component of wavelength of $\lambda_2$. The light of wavelength of $\lambda_1$ is transmitted to the output optical element 4 through the filtering element 5 as illustrated by a solid line. The light of wavelength of $\lambda_2$ is transmitted to the other optical element 3 through the filtering element 5 as illustrated by a dash-dot line.

Each of the optical elements 2, 3 and 4, comprises a lens 13, a ferrule 14 disposed at the end of a transmission optical fiber 17, and a cylindrical sleeve 15 in which the lens 13 and the ferrule 14 are secured by an adhesive agent. The ferrule 14 is of a cylindrical shape and has a longitudinal hollow in which the end of the optical fiber 17 is inserted and secured by an adhesive agent. The fiber core 18 of the optical fiber 17 is led to and exposed on the end surface of ferrule 14. The input optical element 2 is held by a holder 11 and secured to the base plate 1 by means of screws 11a. The output optical elements 3 and 4 are secured to the base plate 1 by a securing means 12 in accordance with the present invention.

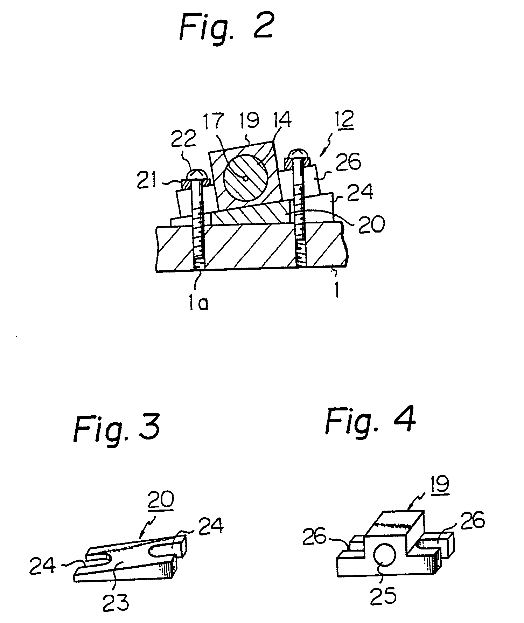

The securing means 12 comprises a holder member 19, a support member 20, and screws 22, as illustrated in Fig. 2. Numeral 21 designates a washer. The holder member 19 has a hole 25 through which the ferrule 14 is inserted and openings 26 for guiding the screw 22 at both sides thereof, as illustrated in Fig. 4. The ferrule 14 is rotatably installed within the hole 25 of the holder 19. The support member 20 has an upper inclined surface 23 and openings 24 at both sides thereof, as illustrated in Fig. 3. The bottom surface of the holder member 19 is flattened so that holder member 19 can slide on the inclined surface 23 of the support member 20 before it is clamped by the screws 22.

The optical element is secured to the base plate by the securing means 12 as follows. First, the input optical element 2 is secured to the base plate 1 by means of the screws 11a. The holder member 19 is rotatably attached on the cylindrical ferrule 14 of the output optical element 4. A device for monitoring the luminous intensity is connected to the optical fiber 17 of the optical element 4. Using the monitor device, the position where the maximum luminous intensity is obtained, i.e., where the optical axis of the output element 4 coincides with the optical axis of the light from the input optical element 2, is found.

The optical element 4 is temporarily held at this position by an appropriate holder means which grasps the ferrule 14 of the optical element 4. Then, the support member 20 is inserted under the holder member 19 and slidingly moved on the base plate 1 until the inclined surface thereof completely contacts the bottom surface of the holder member 19. During this sliding movement of support member 20, the holder member 19 is rotated about the cylindrical ferrule 14, which is held stationary, in response to the movement of the support member 20.

When the inclined plane of the support member 20 coincides with the bottom plane of the holder member 19, the movement of the support member 20 is stopped. Then, each of the screws 22 is screwed into the screw holes 1a of the base plate 1 through the opening 26 of the holder member 19 and the opening 24 of the support member 20. The opening 24 of the support member 20 and the inclined angle of the upper surface of the support member 20 are designed so that the desired position of the support member 20 wherein the inclined surface 23 of the support member 20 is in complete contact with the bottom surface of the holder member 19 can be obtained within the movement range in which the opening 24 of the support member 20 always covers the screw hole 1a of base plate 1.

After the optical element 4 is secured to the base plate 1 by the screws 22, the holder means, which has grasped the ferrule 14 at the position aligned with the optical axis of the light from the input optical element 2, is removed.

The other output optical element 3 is similarly secured to the base plate 1.

The holder member 19 and the support member 20 may be secured to each other and to the base plate 1 by electric welding or laser welding instead of by using screws 22. Securing the holder member 19 and the support member 20 by welding eliminates the limitation on the movement range of the support member 20 since it is not necessary to consider screw holes in the base plate 1.

The input optical element may comprise a light emitting diode. In this case, the optical transmission fiber is replaced by an electric cable. Also, the output optical element may comprise a light receiving diode.

A light attenuating element or a switching element may be disposed between the input optical element and the output optical element, instead of the filtering element of Fig. 1.

Also, the optical device of Fig. 1 can be used as a device for combining light components of different wavelengths by reversing the direction of the light.

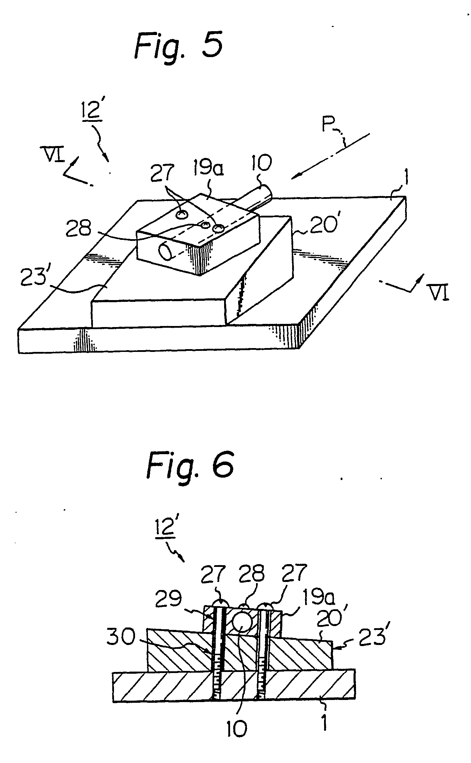

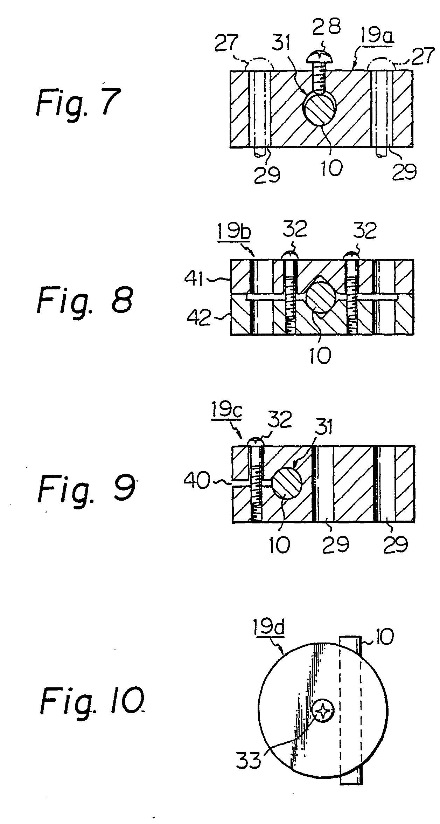

Figure 5 is a perspective view of another embodiment of the present invention. Figure 6 is a sectional view thereof. In this embodiment, each screw 27 for securing a holder member 19a and a support member 20' is screwed to the base plate 1 through a hole 29 of the holder member 19a and a hole 30 of the support member 20'. The inside diameter of the holes 29 and 30 is larger than the outside diameter of the screws 27, allowing the support member 20' to move because of the gap between the hole 30 and the screws 27. The cylindrical optical element 10 is clamped within the hole 31 of the holder member 19a by means of a screw 28, as illustrated in Fig. 7. Variations of the holder member are illustrated in Figs. 8 to 10. The holder member 19b of Fig. 8 comprises a pair of upper and lower clamping pieces 41 and 42, each of which has a V-shaped groove on the inside surface thereof. The otical element 10 is clamped between the upper and lower V-shaped grooves. The clamping pieces 41 and 42 are fastened to each other by screws 32.

In the holder member 19c of Fig. 9, the optical element 10 is held in the inner end of a slit 40 formed at one side of the holder member 19c and fastened by a screw 32.

The holder member 19d of Fig. 10 is of a cylindrical shape and secured to the base plate by a single screw 33 disposed along the axis of the cylindrical body. The optical element 10 penetrates the cylindrical body at the portion adjacent to the screw 33. In the embodiment of Fig. 10, the rotational movement of the holder member and the support member (not shown) which is disposed under the holder member is not limited since only one screw 33 is disposed at the center of the holder member and the support member. Therefore, the holder member and the support member are rotatable about the screw 33.

As mentioned above, in accordance with the mounting structure of the present invention, the optical element is held by a holder member whose bottom surface contacts the inclined upper surface of a support member in a face-to-face manner. Therefore, the optical element is secured firmer and more reliably at the desired position when compared with the conventional structure in which the cylindrical optical element is supported along one line on the supporting surface.

Also, in the mounting structure of the present invention, no adhesive agent is used for securing the holder member and the support member to the base plate. This results in durable and reliable mounting of the optical element on the base plate irrespective of vibration of the optical device and changes in ambient temperature and humidity.

## Claims

1. A structure for mounting an optical element (10, 17) having a cylindrical portion (14) on a base plate (1), comprising a holder member (19) having a flat bottom surface, the cylindrical portion (14) of the optical element (10, 17) being rotatably mounted in the holder member (19), the holder member (19) being mounted on a wedge-shaped support member (20), wherein the flat bottom surface of the holder member (19) contacts an inclined upper surface (23) of the support member (20) face-to-face and the lower inclined surface of the support member likewise contacts the upper surface of the base plate, and the structure being such that before the support member (20) is secured to the base plate (1) the support member is slidingly adjustable between and relative to the holder member and the base plate.

2. A structure according to claim 1, in which the holder member (19) and the support member (20) are secured to each other and to the base plate (1) by means of screw-threaded fasteners (22).

3. A structure according to claim 1, in which the holder member (19) and the support member (20) are secured to each other and to the base plate (1) by welding.

4. A structure according to claim 2, in which both the holder member (19) and the support member (20) have openings (26, 24; 29, 30) for guiding the screw-threaded fasteners (22), the size of the openings (26, 24; 29, 30) and the screw-threaded fasteners (22) being such that a gap is formed between the screw-threaded fasteners (22) and the openings (26, 24; 29, 30) so that the location of the holder member (20) on the support member (19) is adjustable before being clamped by the screw-threaded fasteners (22) to allow minor adjustments in the position of the optical element (10, 17).

5. A structure according to any one of the preceding claims, in which the cylindrical portion (14) of the optical element (10, 17) is inserted into and held in a hole (25, 31) extending through the holder member (19).

6. A structure according to any one of claims 1 to 4, in which the cylindrical portion (14) of the optical element (10, 17) is located between a pair of upper and lower V-shaped grooves (Figure 8) opening towards one another and being formed in the holder member (19).

7. A structure according to any one of the preceding claims, in which the cylindrical portion (14) of the optical element (10, 17) is arranged to be clamped and held in a fixed position with respect to the holder member (19) by means of a screw-threaded fastener (28, 32, 33).

8. A structure according to claim 7 when dependent upon claim 5, in which the holder member (19) includes a slit (40) extending into the hole (31) and in which the screw-threaded fastener (32) closes the slit (40) to clamp the cylindrical portion (14) in the holder member (19).

9. A structure according to any one of the preceding claims, in which the holder member (19a) is of cylindrical shape and is secured to the base plate (1) by a single screw-threaded fastener (33) disposed along the axis of the cylindrical holder member (19a).

## Patentansprüche

1. Aufbau zur Montage eines optischen Elements (10, 17) mit einem zylindrischen Abschnitt (14) auf einer Basisplatte (1) mit einem Halteteil (19), welches eine flache untere Oberflache hat, welcher zylindrische Abschnitt (14) des optischen Elements (10, 17) rotierbar in dem Halteteil (19) montiert ist, welches Halteteil (19) auf einem keilförmigen Tragteil (20) montiert ist, wobei die flache untere Oberfläche des Halteteils (19) eine geneigte obere Oberfläche (23) des Tragteils (20) Stirn-an-Stirn berührt und die untere geneigte Oberfläche des Tragteils in gleicher Weise die obere Oberfläche der Basisplatte (1) berührt, und die Struktur derart ist, daß, bevor das Tragteil (20) an der Basisplatte (1) befestigt wird, das Tragteil zwischen Halteteil und Basisplatte und relativ zu diesen gleitfähig justierbar ist.

2. Aufbau nach Anspruch 1, bei dem das Halteteil (19) und das Tragteil (20) miteinander und der Basisplatte (1) mittels Schraubgewinde aufweisenden Befestigungsmitteln (22) befestigt sind.

3. Aufbau nach Anspruch 1, bei dem das Halteteil (19) und das Tragteil (20) miteinander und mit der Basisplatte (1) durch Schweißen befestigt sind.

4. Aufbau nach Anspruch 2, bei dem sowohl das Halteteil (19) als auch das Tragteil (20) Öffnungen (26, 24; 29, 30) zum Führen der mit Schraubgewinde versehenen Befestigungsmittel (22) haben, wobei die Größe der Öffnungen (26, 24; 29, 30) und der mit Schraubgewinde versehenen Befestigungsmittel (22) derart ist, daß ein Spalt zwischen den mit Schraubgewinde versehenen Befestigungsmitteln (22) und den Öffnungen (26, 24; 29, 30) gebildet wird, so daß der Ort des Halteteils (20) auf dem Tragteil (19) einstellbar ist, bevor es durch die mit Schraubgewinde versehenen Befestigungsmittel (22) geklammert wird, um kleinere Einstellungen in der Position des optischen Elements (10, 17) zu erlauben.

5. Aufbau nach einem der vorhergehenden Ansprüche, bei dem der zylindrische Abschnitt (14) des optischen Elementes (10, 17) in ein Loch (25, 31), das sich durch das Halteteil (19) erstreckt, eingeführt und gehalten wird.

6. Aufbau nach einem der Ansprüche 1 bis 4, bei dem der zylindrische Abschnitt (14) des optischen Elements (10, 17) zwischen einem Paar von oberen und unteren V-förmigen Nuten (Figur 8) angeordnet ist, die sich eine zu der anderen hin öffnen und in dem Halteteil (19) aufgebildet sind.

7. Aufbau nach einem der vorhergehenden Ansprüche, bei dem der zylindrische Abschnitt (14) des optischen Elements (10, 17) so angeordnet ist, daß er in einer festen Position in Bezug auf das Halteteil (19) mittels der mit Schraubgewinde versehenen Befestigungsmittel (28, 32, 33) geklammert und gehalten wird.

8. Aufbau nach Anspruch 7, in Verbindung mit Anspruch 5, bei dem das Halteteil (19) einen Schlitz (40) aufweist, der sich in das Loch (31) erstreckt und in dem das mit Schraubgewinde versehene Befestigungsmittel (32) den Schlitz (40) schließt, um den zylindrischen Abschnitt (14) in dem Halteteil (19) zu klammern.

9. Aufbau nach einem der vorhergehenden Ansprüche, bei dem das Halteteil (19a) von zylindrischer Form und an der Basisplatte (1) mittels eines Befestigungsmittels (33) mit Schraubgewinde befestigt ist, welches längs der Achse des zylindrischen Halteteils (19a) angeordnet ist.

**Revendications**

1. Structure de montage d'un élément optique (10, 17) ayant une partie cylindrique (14) sur une plaque de base (1), comprenant un organe de maintien (19) qui a une face inférieure plate, la partie cylindrique (14) de l'élément optique (10, 17) étant montée dans l'organe de maintien (19) de manière qu'elle puisse tourner, l'organe de maintien (19) étant monté sur un organe de support (20) en forme de coin, la surface inférieure plate de l'organe de maintien (19) étant au contact d'une surface supérieure inclinée (23) de l'organe de support (20), face à face, et la surface inférieure inclinée de l'organe de support étant de même au contact de la surface supérieure de la plaque de base, et la structure est telle que, avant fixation de l'organe de support (20) sur la plaque de base (1), l'organe de support est réglable par coulissement entre l'organe de maintien et la plaque de base et par rapport à eux.

2. Structure selon la revendication 1, dans laquelle l'organe de maintien (19) et l'organe de support (20) sont fixés l'un à l'autre et à la plaque de base (1) par des organes filetés de fixation (22).

3. Structure selon la revendication 1, dans laquelle l'organe de maintien (19) et l'organe de support (20) sont fixés l'un à l'autre et à la plaque de base (1) par soudage.

4. Structure selon la revendication 2, dans laquelle l'organe de maintien (19) et l'organe de support (20) ont des ouvertures (26, 24; 29, 30) de guidage des organes filetés de fixation (22), la dimension des ouvertures (26, 24; 29, 30) et des organes filetés de fixation (22) étant telle qu'un espace est formé entre les organes filetés de fixation (22) et les ouvertures (26, 24; 29, 30), si bien que l'emplacement de l'organe de maintien (20) sur l'organe de support (19) est réglable avant serrage par les organes filetés de fixation (22) afin que de petits ajustements de la position de l'élément optique (10, 17) soient possibles.

5. Structure selon l'une quelconque des revendications précédentes, dans laquelle la partie cylindrique (14) de l'élément optique (10, 17) est introduite dans un trou (25, 31) qui traverse l'organe de maintien (19) et y est retenue.

6. Structure selon l'une quelconque des revendications 1 à 4, dans laquelle la partie cylindrique (14) de l'élément optique (10, 17) est disposée entre deux gorges supérieure et inférieure en V (figure 8) qui débouchent l'une vers l'autre et qui sont formées dans l'organe de maintien (19).

7. Structure selon l'une quelconque des revendications précédentes, dans laquelle la partie cylindrique (14) de l'élément optique (10, 17) est destinée à être serrée et maintenue en position fixe par rapport à l'organe de maintien (19) à l'aide d'un organe fileté de fixation (28, 32, 33).

8. Structure selon la revendication 7 lorsqu'elle dépend de la revendication 5, dans laquelle l'organe de maintien (19) comporte une fente (40) pénétrant dans le trou (31), et dans laquelle l'organe fileté de fixation (32) ferme la fente (40) afin que la partie cylindrique (14) soit serrée dans l'organe de maintien (19).

9. Structure selon l'une quelconque des revendications précédentes, dans laquelle l'organe de maintien (19a) a une configuration cylindrique et est fixé à la plaque de base (1) par un seul organe fileté de fixation (33) disposé le long de l'axe de l'organe cylindrique de maintien (19a).

Fig. I

# Fig. 2

# Fig. 3

# Fig. 4

## Fig. 5

## Fig. 6

Fig. 7

Fig. 8

Fig. 9

Fig. 10